Europäisches Patentamt

European Patent Office

Office européen des brevets

(19)

(11) **EP 1 386 538 A1**

(12) **EUROPEAN PATENT APPLICATION**
published in accordance with Art. 158(3) EPC

(43) Date of publication:
**04.02.2004 Bulletin 2004/06**

(21) Application number: **02718577.6**

(22) Date of filing: **12.04.2002**

(51) Int Cl.⁷: **A01N 25/00**, A01M 7/00,
A01G 7/00, A01C 21/00,
G06F 19/00

(86) International application number:
**PCT/JP2002/003711**

(87) International publication number:
**WO 2002/082899 (24.10.2002 Gazette 2002/43)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **13.04.2001 JP 2001114802**

(71) Applicant: **Think Chemical Co. Ltd.
Kishiwada, Osaka 596-0077 (JP)**

(72) Inventor: **KISIDA, Hirosi
Takarazuka, Hyogo 665-0063 (JP)**

(74) Representative: **Schüssler, Andrea, Dr.
Kanzlei Huber & Schüssler
Truderinger Strasse 246
81825 München (DE)**

(54) **METHOD OF DETERMINING THE PRACTICALLY USEFUL APPLICATION DOSE OF PESTICIDE, METHOD OF DEVELOPING PESTICIDE AND METHOD OF INDICATING THE PERFORMANCE OF PESTICIDE**

(57) The present invention provides a method for calculating a practically useful application dose, with which a desired residual activity period and desired effective preventive value can be retained, by comparison with a control pesticide in obtaining an equivalent useful application dose by conversion by correlating a decreasing constant of a pesticide obtained from the results of residual activity testing conducted in actual situation for use or under environmental factors corresponding to the actual situation, and a damage rate or a damage suppression rate to the results of concentration-mortality curve testing, a method for developing a pesticide, and a method for indicating the performance of a pesticide.

**Figure 1**

**Description**

TECHNICAL FIELD

The present invention relates to a method for determining the practically useful application dose of a pesticide, a method for developing a pesticide, and a method for indicating the performance of a pesticide.

BACKGROUND ART

Conventionally, the practically useful application dose of a pesticide has been determined on the basis of reliable data obtained from a large number of large-scale tests repeated in actual situation for use carrying out a test using a plurality of dosages of a pesticide set with reference to the relative potencies, or their basic potencies determined by indoor concentration-mortality curve testing and the like, relative to a control pesticide. In the conventional method, however, vast amounts of equipment costs and personnel expenses and a long time of testing are necessary for a plurality of dosages of a pesticide and repetition of a large number of large-scale tests; it has been desired to develop a method for determining the practically useful application dose of a pesticide more conveniently, less expensively, and more accurately.

Also, although the performance of a pesticide has been described on a label and the like, the showing has been limited to the kind of a target pest and the useful application dose of a pesticide or its dilution ratio. With only such information, it has been very difficult for consumers to choose the most appropriate one among the wide variety of pesticides available in the market.

DISCLOSURE OF INVENTION

In view of the above circumstances, the present inventor has discovered a method for evaluating the relative performance of a pesticide and a method for determining a practically useful application dose very inexpensively and conveniently by monitoring the change of a pesticide used in actual situation for use or under environmental factors similar to the actual situation in accordance with the passage of time, and completed the present invention.

Concentration-mortality curve testing and residual activity testing are known methods very commonly used for testing the basic potencies of chemical agents. The method wherein bioassay data from residual activity testing are assessed in comparison with data from concentration-mortality curve testing and converted to test amounts of a pesticide is also a known method used as an analytical method for chemical agents based on a biological approach. Although, concentration-mortality curve testing provides preventive value as a minimally variable value as it is conducted indoors under particular test conditions, the test conditions vary over time during the residual activity testing. It has also been known that the half-life of various chemical agents existing on crops observed outdoors is widely variable [Gunter, F.A. and Blinn, R.C., Analysis of Insecticides and Acaricides, Interscience Publishers, Inc., New York (1955)]. As a result, the decreasing speed such as half-life of a chemical agent in outdoor has been utilized only to the extent described in a chemical agent registration document and the like.

However, it has been found out that data variation in residual activity testing using a subject chemical agent alone can easily be avoided by simultaneously testing a reference control pesticide in each bioassay, and that these values can be used to understand the agent's performance and to determine the practically useful application dose of the agent, which are the most important tasks in the developmental work for agricultural chemicals, by mathematically processing the thus-obtained values of the decreasing speed of the chemical agent.

Accordingly, the present invention provides a method for determining the practically useful application dose of a pesticide using the decreasing speeds of a chemical agent in actual situation for use or under environmental factors similar to the actual situation in determining the practically useful application dose of a chemical agent in actual situation for use for the development of a pesticide, a method for developing a pesticide, and a method for indicating the performance of a pesticide.

Using the methods of the present invention for determining the practically useful application dose of a pesticide, for developing a pesticide, and for indicating the performance of a pesticide, the practically useful application dose can be determined very conveniently and inexpensively, thus significantly shortening the developmental period for a new pesticide and remarkably reducing developmental costs for new formulations, as compared to conventional methods.

BRIEF DESCRIPTION OF THE DRAWINGS

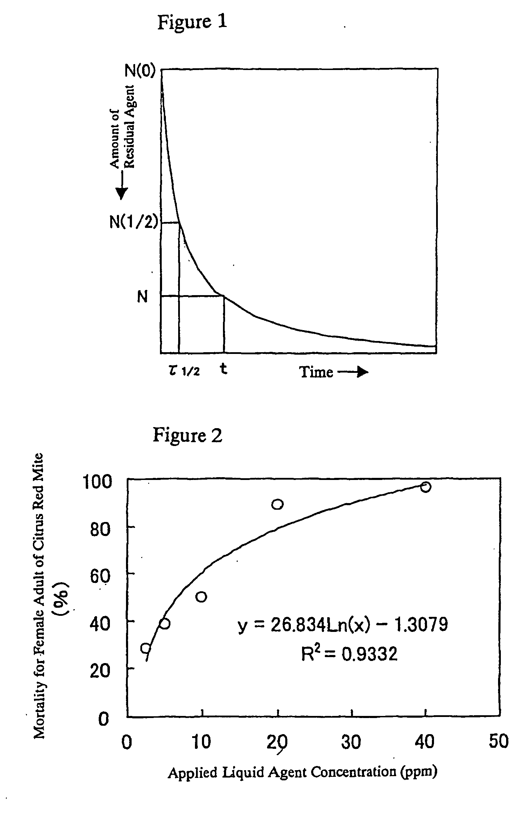

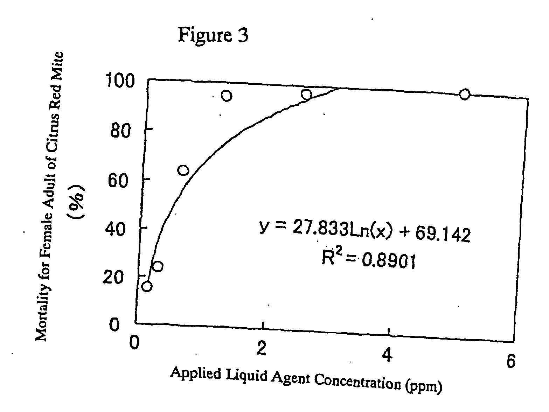

Figure 1 shows an explanatory diagram for the decreasing variation curve for an agent applied outdoors; Figure 2 shows an explanatory diagram for the concentration-mortality curve of NC-1111 for female adults of the citrus red mite (*Panonychus citri* McGregor); Figure 3 shows an explanatory diagram for the concentration-mortality curve of Sanmite® for female adults of the citrus red mite (*Panonychus citri* McGregor).

BEST MODE FOR CARRYING OUT THE INVENTION

The present invention relates to a method for determining the practically useful application dose of a pesticide, enabling the preventive value and residual activity period in which the preventive value can be retained, both representing the practical performance of a pesticide, to a desired value, and the main characteristics of the present invention reside in that the decreasing speed of a pesticide is used in actual situation for use, which necessitates a practically useful application dose for determining, or under environmental factors similar to the actual situation.
The present invention is hereinafter described.
Usually, the active ingredient concentration (%) in a diluted aqueous solution applied in practical uses is represented by the equation:

Active Ingredient Concentration (%)

= Active Ingredient Content (%) in Formulation ÷ Dilution Ratio

and the value is multiplied by 10,000 to obtain an applied liquid agent concentration expressed in ppm. In the present invention, for the sake of convenience, this "practical applied liquid agent concentration" expressed in ppm, which is the active ingredient content in the applied liquid in actual uses, is defined as " practically useful application dose." Generally, this "practically useful application dose" is either the application dose of pesticide applied to ensure an effect comparable to that of conventional agents or in some cases the application dose of pesticide applied to enable the extension of the pesticide's residual activity period to a desired extent, as compared to conventional agents in an attempt to take advantage over conventional agents with the aim for an increased market share as desired.
In this connection, the "practical applied liquid agent concentration" as used herein, expressed in ppm, can be expressed as the amount (g/ha) of an active ingredient (technical material) used, based on g (gram) per ha (hectare), as converted from the applied liquid volume of 100 L (liters) per 10 ares.
However, the "practically useful application dose" can also be expressed in any other value or unit in use for similar purposes. For example, "dilution ratio" with water for actual uses can be used, and the "practically useful application dose" can be expressed as the active ingredient content of the pesticide in the mixed soil when the formulation is mixed with soil. Provided that the application dose of formulation applied per unit area is constant, the "active ingredient content in the formulation" itself can be used as "practically useful application dose." In other words, the term " practically useful application dose" as used in the present invention serves as a means for showing the performance or economics of a pesticide, and can be expressed in g/ha, lb (pounds)/acre, U.S. pint/acre, Imp. fl. oz./acre, ppm, or as dilution ratio or the like, as long as the amount of technical material used per unit area or unit volume can be expressed deductively or directly.
First, the present invention is hereinafter described from a theoretical viewpoint.
The decreasing speed of a pesticide applied and adhered to a subject of application, such as a plant, house floor or sandy gravelly soil, is usually expressed by first-order reaction. This has been commonly explained as being attributable to the fact that the agent decreasing speed expressed as a rate of a reaction (photodecomposition reaction, perspiration, run-off and the like) for an overwhelmingly large amount of environmental factors, for instance, light, wind, humidity, heat, rain and the like depends solely on the concentration of the agent because the amount of the agent applied is extremely small. On the other hand, the potency for pest control at a given time is regulated by the amount of the agent remaining on the subject of application at that time. In other words, it can be considered that there is obtained a result similar to that of pest control testing for a pest "treated with a given amount of agent" at a given time.
Usually, any new pesticide or new formulation cannot be determined to be "practically useful" unless it is proven to have an effect and residual activity period equivalent to, or more than, those of existing agents available in the relevant market. Also, in some cases, the performance of the new pesticide or formulation is often evaluated on the basis of the multiplication factor for its residual activity period compared to the residual activity period of existing agents.
The applied pesticide decreases over time from the position where the pesticide was applied, due to the influence of surrounding environmental factors, especially of wind, light, temperature, rain and the like. In actual situation, harmful insects, diseases, weeds and the like move as time elapses in the form of, for example, adults, larvae, spores, seeds or the like. Additionally, the growth stage of harmful insects, diseases, weeds or the like is variable over time with season, and changes in environmental factors such as atmospheric temperature and rainfall. Furthermore, the effectiveness of some pesticides is considerably different depending on the growth stage and developmental period of target harmful insects, diseases, weeds and the like.

Due to these causes, the pest control effect of a pesticide varies widely over time. The pest control effect is expressed by preventive value, an index of the effectiveness of the agricultural chemical applied, and residual activity period during which the pest control effect is retained, i.e., what is called residual activity period. A pesticide having a short residual activity period is less effective from the viewpoint of crop protection, though its short-term effect may be high, and in many cases a practical pest control effect is obtained after repeated applications. Generally, the increase in application frequency is not always desirable because it will cause the increased personnel expenditure and other various expenses for application treatment.

Because the residual activity period affects the remaining of an agent, whereas the residual activity period offers an advantage represented by the duration of effect, it is needless to say that the appropriate residual activity period should be controlled on the basis of the safety of the pesticide.

As a result of extensive investigation of all these phenomena, it has been found out that the practically useful application dose which has been conventionally determined with vast costs and long test periods could be determined very inexpensively and easily by combining the results of basic potency testing with those of residual activity testing in actual situation for use or under environmental factors similar to the actual situation, both of which represent ordinary bioassay evaluation, and the present invention has been completed.

The present invention is hereinafter described in more detail from a theoretical viewpoint.

A pesticide to which the present invention is applicable refers to synthetic or naturally occurring compounds, mixtures, organisms and the like that are capable of directly or indirectly controlling organisms that are harmful to human, or crops, animals or various environments beneficial to human, for instance, harmful insects, mites, murines, diseases, weeds or the like. Crops, animals or various environments that are beneficial to human include, for example, cultivated crops such as cereals, vegetables, fruit trees and cotton; animals such as cows, horses, sheep, pigs, dogs and cats; and various environments that are directly or indirectly beneficial to the human life, such as clothing, bedding, houses, furniture, books, electrical equipment, gardens, forests and street trees. In addition, an actual pesticide includes all pesticides, plant protectors, naturally occurring or synthetic pheromonal agents, mothballs and the like, including insecticides such as organic phosphorus compounds, carbamate compounds, nereistoxin compounds, organic halogen compounds, pyrethroid compounds, neonicotinoid compounds, GABA-related compounds including phenylpyrazole compounds, inhibitors of electron transport system, insect growth regulators including compounds having a chitin synthesis inhibitory activity, a juvenile hormone-like activity, an ecdysone-like activity, and an anti-hormone-like activity, naturally occurring compounds including BT agents and macrolide compounds; acaricides having various structures and action profiles; soil insecticides including nematocides; slug control agents; muricides; pheromonal agents of insect; compounds having insect attracting or repelling activity; chemosterilants for insect; fungicides such as copper compounds, sulfur compounds, polyhaloalkylthio compounds, aliphatic or aromatic halogen compounds, organic phosphorus compounds, benzimidazole compounds, dicarboxyimide compounds, carboxyamide compounds, N-heterocyclic compounds, inhibitors of electron transport system, and compounds having phytoalexin activity; herbicides such as phenoxy compounds, benzoic acid compounds, acid amide compounds, carbamate compounds, urea compounds, diphenyl ether compounds, dinitroaniline compounds, nitrile compounds, triazine compounds, sulfonylurea compounds, organic phosphorus compounds, heterocyclic compounds, aliphatic compounds, and amino acid compounds; and plant growth regulators.

Actual situation for use in which the actual useful application dose can be determined by the method of the present invention include, for instance, a situation where pests are controlled when plants are cultivated outdoors or in the facilities and a situation where pests having harmful or unpleasant effects on human or animals in household or in the field of prevention of epidemics are controlled; the method of the present invention is applicable to all actual situations for use concerning pest control. The actual situation for use to which the present invention is preferably applicable is a situation where pests against agricultural crops are controlled, more preferably a situation where pests against crops cultivated outdoors are controlled.

The term residual activity testing in actual situation for use as used herein refers to all bioassays on practical scales or small scales in all actual situations for use, including open fields, facilities and houses. It is necessary to carry out the residual activity testing under environmental factors the same as or similar to actual situation where the target pest is controlled; in case of outdoor cultivated crops, for example, the testing should be carried out outdoors on building roofs or farmland. This is because residual activity period should be demonstrated in consideration of surrounding environmental factors in actual situation, for instance, light, wind, humidity, heat and rain, as described above. It is quite difficult to use the results of residual activity testing carried out indoors for determining the practically useful application dose in outdoor cultivation. Conversely, it is desirable to avoid using the results of residual activity testing of a pesticide conducted outdoors as, for example, test data for determining the practically useful application dose for control of indoor pests, if possible.

In a situation for crop cultivation, crop growth can be mentioned as another major factor for the decrease in residual agricultural chemicals, as well as the aforementioned environmental factors. In actual situation for use, the concentration of the pesticide applied and adhered to the surface of the crop decreases apparently because the pest control agent is diluted in accordance with the growth of a crop. Usually, crops used for indoor pot testing and the like are much smaller than natural crops in actual situation for use; in many cases, the growth rate of the crop is also inhibited by the suppression of the fertilization in accordance with the purpose of the indoor pot testing. Hence, there is an extremely great difference in plant growth rate due to the difference in cultivation method between indoor pot testing and actual situation for use.

Additionally, plant growth rates in actual situation also widely vary depending on the kind and growth stage of the crop, weather and the like. Therefore, there is no way to cope with this apparent decrease in residual agricultural chemicals associated with plant growth rates, except for appropriately increasing the application dose by predicting the growth rates to some extent in situations for actual application of the agent, taking into consideration the residual activity period. Actually, this issue is handled as a safety factor for ensuring a practical effect, and the current situation is that no more than a poorly evidenced solution is achieved by repeatedly carrying out a large-scale testing for the evaluation of practical utility.

As described above, the decreasing speed of the agricultural chemical existing on crops or in the outdoor environment is usually expressed by first-order reaction. This means that the decreasing speed of a pesticide depends on only the amount of the residual agricultural chemical at a given time, without dependence on the initial concentration. This has been known to agree to the half-life theory used in radiation decay.

Generally, the half-life: $\tau_{1/2}$ of an agricultural chemical is obtained for the chemical's intrinsic outdoor decreasing constant: $\lambda$, using the equations shown below. Equation-1 and Equation-2 are a decreasing speed equation and a half-life equation, respectively.

$$-dN/dt = \lambda N, \quad N/N(0) = e^{-\lambda t} \qquad\qquad \text{Equation-1}$$

$$1/2 = e^{-\lambda t}, \quad \tau_{1/2} = \ln 2/\lambda = 0.693/\lambda \qquad\qquad \text{Equation-2}$$

Figure 1 shows the decreasing curves for pesticides on plants, house floors, sandy gravelly soil and the like to which the agent was applied. With regard to Equation-1, Equation-2 and Figure 1, N(0) indicates the application dose of the agent adhered just after application; N indicates the amount of the agent remaining after t days. Hence, if N(0) is expressed as the treatment liquid agent concentration (ppm) at the time of application, N would have the similar meaning as treatment in the liquid agent concentration of N (ppm) after t days.

An object for carrying out the residual activity testing using outdoor pots in crop cultivation is usually to determine the residual activity period of the agent for pest control. In the present invention, however, the residual activity testing is used to monitor the pesticide decreasing speeds as shown in Figure 1. For example, pot-planted plants or soil therein, which is treated by pesticide application and exposed to outdoor conditions, is transferred to indoors after t days, or leaves to which the agent is adhered are brought back to the home, and testing concerning pest control is conducted indoors or the like to achieve bioassay on the residual activity of the agent. This can be considered to be equivalent to the conduct of the same testing as indoor concentration-mortality curve testing by treatment in a concentration of the liquid agent of N (ppm).

A similar method can be usually used in residual activity evaluation testing of a pesticide in household and in the field of prevention of epidemics. This is because the residual activity period of a pesticide essential to the evaluation of the performance of the agent itself.

In the development of a pesticide, it is common practice to select substances capable of controlling target pests out of numerous synthetic or naturally occurring compounds or mixtures, and to determine its applicability using a bioassay system or a safety-related test system. This process is usually called screening, and in recent years, it has been said that the probability of successful development of a potentially profitable pesticide is 1/50000. Screening is conducted through steps with increasing scale from initial experiments using test tubes and Petri dishes to final testing in actual situation, for instance, outdoor testing in outdoor cultivation, and practical utility is evaluated.

Only those compounds eventually proven through these test systems to be highly practical in terms of potency, to be safe and to be highly economical will actually become available in society as a pesticide. Recently, however, there has been a demand for a pesticide that is effective in a useful application dose as small as possible and that has a readily degradable property to reduce its environmental influence, due to the increasingly rigorous regulations on environmental issues and safety. As such, great difficulty in development exerts economic burdens on the manufacturers, and there have been recently active trends for M & A on global scale to reduce developmental costs.

In developmental activities in itself, however, an old approach still has been employed. Making step-by-step sievings to larger-scale test systems remains to be the common way to screening, though minor modification may be made in the method of screening. Manufacturers cannot free themselves from the misleading stereotypical belief that increasing scale represents a steady approach to situations for actual application.

According to the present inventor, it has been found out for the first time found that the method using a decreasing speed in actual situation for use is applicable to actual large-scale application situations even when the test scale is small, provided that a control pesticide is used. The method of the present invention demonstrated that step-by-step upscaling is almost meaningless in the evaluation of practical effects. Hence, many step-by-step screening tests are of no sense, and in its turn, the developmental period can be dramatically shortened, thus enabling significant reductions in research personnel and scale and remarkable reductions in the developmental costs for a pesticide in manufacturers.

On the other hand, when viewed from the standpoint of a consumer, who purchases a pesticide and applies it to the upland fields or mountain forests, a pesticide, or what is called an agricultural chemical, is receiving severe criticism from society. In addition, the consumer as an applier of a pesticide has recently become increasingly conscious of his/her own health-related aspects. The consumer using a pesticide continues to routinely observe for the occurrence of pests, or harmful insects and diseases, with stricter-than-others attitudes through crop cultivation. A system is always in place for taking any immediate actions in the event of occurrence of pests expected to lead crop damage.

The problem resides in that the consumer has absolutely no information on a pesticide suitable for the current status of onset of pests. A wide variety of pesticides are available at pesticide shops. Also, available are several tens of kinds of agents for pests that can damage target crops. No information is provided on the package label of any agent except for the name of an applicable crop, name of a target pest, and dilution ratio (equivalent to useful application dose). Most consumers are able to make judgments on economic injury level, crop yields and future incidence of pests on the basis of meteorological conditions, status of occurrence of pests and status of crop growth. However, for pesticides that are developed and registered one after another, no information on potency has been provided. Everyone is aware of the major differences in dilution ratio (useful application dose) among different agents. In fact, even market prices vary widely. Under these circumstances, it is of paramount importance for the consumer to obtain information on useful application dose and the residual activity period common to all pesticides.

The present invention has made it possible to provide data on this information. As a result, a consumer can positively select a pesticide suitable for his/her own farm, resulting in a dramatically increased motivation for pest control and hence for cultivation.

Next, typical procedures for the method for determining the practically useful application dose of a pesticide, the method for developing a pesticide, and the method for indicating the performance of a pesticide according to the present invention are more specifically described. However, these descriptions are not to be construed as limitative on the scope of the present invention.

A.) Concentration-mortality curve testing for pests such as target disease and insect pests, and weeds is conducted indoors.

"Note that procedures A through D are also conducted for a control pesticide."

It is preferable that the test is conducted in a concentration-mortality curve of different concentrations at fine intervals with a dilution ratio as small as possible, for instance, in various concentrations of about two-fold serial dilutions. Additionally, it is desirable that pest growth stage, days of observation after treatment, and the like, be standardized between residual activity testing and this concentration-mortality curve testing. Of course, in concentration-mortality curve testing, growth conditions such as temperature, shining hours and humidity should be controlled as accurately as possible. When using a cultivated plant, it is also necessary that water sprinkling or the like is accurately controlled.

B.) Data from concentration-mortality curve testing are plotted to obtain a graph of concentration-potency correlation.

The correlation (Equation-3) based on the logarithmic approximation of concentration-mortality curve for the control of the target pest is obtained in advance.

$$\text{Exterminating Ratio (\%)} = A' \times \ln(N') + B' \qquad \text{Equation-3}$$

In the above equation, A' and B' are constants, and N' represents liquid agent concentration (ppm). In the preparation of the graph and the correlation equation, commonly available spreadsheet programs such as Excel® (Microsoft) can be used. Although reference control compounds are not always necessary because almost no seasonal changes usually occur in indoor pot testing data, one or more reference compounds should be used as a control pesticide in practicing the present invention.

C.) Residual activity testing is conducted outdoors (N(0)': initial useful application dose in residual activity testing).

The outdoors is intended to mean the surroundings which are affected by nature such as sunshine, wind and heat. Rooftops of experimental buildings being not shaded by any other building are also acceptable. However, it is preferable to avoid the effect of rainfall just after the application. This is because of the possibility that the testing may fail due to excess run-off caused by rainfall just after the application before the agent fully adheres to the plant leaf surface or sandy gravelly soil. Basically, the treatment application rate for residual activity testing may be set so that the preventive value can be less than 100% in a few days to one week (some observation period, usually one week, is considered to be necessary for averaging the varying surrounding environmental factors). Therefore, the agent can be usually applied in a useful application dose equivalent to or slightly higher than the minimum value of LC100 (100% lethal concentration) obtained in concentration-mortality curve testing. Values obtained from probit conversion can also be used for the mortality and the like.

D.) A reference control compound is always necessary even in residual activity testing.

Surrounding environmental factors are always variable. The factors are particularly greatly changed by seasonal changes. The minimum practically useful application dose should be corrected by always comparing the actual useful application dose for the control pesticide with the control pesticide. Usually, it is desirable to use as the control pesticide an agent that is currently of the highest market value or is likely to be so in the near future for the desired crop and the target pest.

E.) The treatment application rate corresponding to the preventive value passing from the appropriate days after treatment (t) (N': amount of agent remaining after t days, which is regarded as useful application dose), out of the results of residual activity testing, is read from a graph of concentration-mortality curve B, or calculated from the concentration-potency correlation equation.

F.) t (days after treatment: days), N(0)' (treatment (= initial application) dose after residual activity testing: ppm) and N' (amount of agent remaining after t days, which corresponds to treatment useful application dose at that time: ppm) are substituted in the decreasing speed equation of the agent in open fields (Equation-1):

$$N/N(0) = e^{-\lambda t} \qquad \text{Equation-1}$$

to obtain a decreasing constant in open fields (only under the outdoor residual activity testing conditions used here) $\lambda$ which is intrinsic for each agent.

G.) The decreasing constant is substituted in the half-life equation (Equation-2):

$$\tau_{1/2} = \ln 2/\lambda = 0.693/\lambda \qquad \text{Equation-2}$$

to obtain the half-life: $\tau_{1/2}$ (days) of the agent in open fields (only under the outdoor residual activity testing conditions used here). Although the half-life is not always necessary for the calculation of the practically useful application dose, it is important to understand the properties of individual agents. The half-life obtained here is useful for a general comparative value to some extent when the half-life is used as a comparative value for the control pesticide. The half-life described in various reports concerning residual agricultural chemical in crops and the like, is a value obtained under specific conditions, and it is generally desirable that the value is used as a comparative value for the control pesticide. Because each of the decreasing constant and half-life obtained here is a specific value according to residual activity testing conducted under various outdoor conditions, it is necessary that they are handled carefully.

H.) The residual activity period of the control pesticide under the conditions used for the residual activity testing is calculated from the practical concentration of the control pesticide. From the concentration-mortality curve correlation equation of the control pesticide for pest control (Equation-3):

$$\text{Exterminating Ratio [for instance, 90\%]} = A' \times \ln(N') + B' \qquad \text{Equation-3,}$$

the residual liquid agent concentration (N') at the time when the control pesticide retains a certain preventive value (for instance, 90%) under the aforementioned outdoor residual activity testing conditions is obtained.
Furthermore, by substituting N', the practically useful application dose (N(0)') of the control pesticide and the decreasing constant of the control pesticide in the decreasing speed equation (Equation-1):

$$N'/N(0)' = e^{-\lambda t} \qquad \text{Equation-1,}$$

there was obtained a residual activity period (t (days)) under the aforementioned residual activity testing conditions inherently possessed by the control pesticide in the actual useful application dose.
Generally, for a new pesticide to be accepted in the same market as the control pesticide, it will be difficult to gain a share unless the agent possesses a residual activity period equal to or longer than that of the control pesticide. For this reason, the practically useful application dose is determined here to obtain a residual activity period equal to that of the control pesticide. Of course, this method enables the user to freely set a practically useful application dose to have a residual activity period longer than that of the control pesticide by setting the residual activity period at a desired level compared to the control pesticide.
Even if the practically useful application dose is doubled as compared to a conventional product, the residual activity period would never double. The method of the present invention can also be used to improve the performance of a conventional product. The following procedure may be conducted with a residual activity period two times as long as the duration (t (days)) of residual activity of the conventional product.

I.) The practically useful application dose (N(0)) of the pesticide is determined.

First, in the same manner as in the calculation for the control pesticide in H.), the residual liquid agent concentration (N) at the time when the pesticide retains a certain preventive value (for instance, 90%) is calculated. The residual liquid agent concentration (N) at the time of 90% preventive value was calculated using the concentration-mortality curve correlation equation of the pesticide for the target pest (Equation-3):

$$\text{Exterminating Ratio [for instance, 90\%]} = A \times \ln N + B \qquad \text{Equation-3}$$

Subsequently, by substituting N, the decreasing constant of the pesticide: $\lambda$ which has been previously determined under the outdoor residual activity testing conditions, and the residual activity period (t) determined in H.) in the decreasing speed equation (Equation-1):

$$N/N(0) = e^{-\lambda t} \qquad \text{Equation-1,}$$

the practically useful application dose (N(0)) of the pesticide was calculated.
The comparative value of the practically useful application dose as compared to the control pesticide instantly represents the relative performance of the pesticide. Additionally, using a value of residual activity period "n" times as long as the residual activity period (t), a practically useful application dose offering economics "n" times as large as that of the control pesticide can be obtained. A critical factor for the evaluation of the economics of a pesticide under development will be thus provided. The economics can be simply evaluated by using these values, and the manufacturing costs of the control pesticide and the agricultural chemical under development.
By substituting the individual equations in the respective specified positions of cells in a commonly available spreadsheet program such as Excel® (Microsoft), the practically useful application dose can be easily calculated.
A pesticide permitting the determination of its practically useful application dose according to the present invention is a composition containing an active compound capable of controlling, repelling or attracting a pest, in which the compound can be a naturally occurring substance or a partially or totally synthetic chemical product, or any of viruses, microorganisms, antibiotics and the like. The pesticide to which the present invention is applicable may have any action profile. Although the potency onset speed may be rapid or slow, it is necessary that potency is determined using a practical index, for instance, degree of crop damage, if potency onset speeds differ from each other.

The indoor concentration-mortality curve testing data for a pesticide, used in the present invention, are obtained by a bioassay method with the agent adhered to the subject of application. This is because the agent potency evaluation process in the residual activity testing described above must agree to the potency evaluation method in this concentration-mortality curve testing. The residual activity testing is usually conducted by a method wherein the subject of application treated with the agent is put into an actual situation or a similar environment to the actual situation, a pest is inoculated to the subject of application over time, and after a given time the preventive value is observed. Although the second half of this residual activity testing, in which the subject of application is inoculated with a pest and after a given time the preventive value is observed, is also conducted in the concentration-mortality curve testing, the two test methods must completely agree with each other.

Although there is some dependency on differences in agent action profile and action mechanism, it is desirable that the pest used in the bioassay usually has a growth stage which is the same as or similar to the appropriate time for practical treatment as much as possible.

In the most common practice of pest control in the agricultural field where the pesticide is applied directly to an outdoor cultivated crop, for example, a residual activity testing is preferably conducted by applying the agent to a pot-planted crop. The method is carried out by inoculating a pest into the entire or a part of a plant which is treated with the agent over time after the application of the agent, allowing the plant for an appropriate time, and observing the preventive value for the pest. Accordingly, a concentration-mortality curve testing in accordance with the residual activity testing is also conducted by a method wherein the entire or a part of a plant treated with the agent is inoculated with a pest, and after an appropriate time the preventive value for the pest is observed. It is desirable that the crop and pest used in the bioassay is the same sort and kind as those used in the desired actual situation. In particular, if the issue of pest resistance is closely associated with the practically useful application dose, a pest living in the actual situation which possesses the same resistance must be used.

The pesticide used in the present invention is used after formulated into most ordinary and common formulation forms. The formulation forms include, for example, soluble concentrates, emulsifiable concentrates, liquid formulations, oil solutions, wettable powders, water dispersible granules, suspension concentrates, concentrated emulsioms, microemulsions, suspoemulsions, suspensions, aqueous suspensions, dust formulations, dust-granule mixtures, foams, pastes, tablets, granules, aerosols, active compound-impregnated natural and synthetic substances, controlled release formulations such as microcapsules, "jumbo" formulations, water surface floating granular formulations, oil solutions for spreading on paddy land surface water, paints, bait agents, injections, seed coatings, combustion type formulations, fumigants, smoking agents, transpiration agents, composite emulsion formulations, gel formulations, ULV agents and the like, and may be used for soil mixing treatment, spraying, painting and the like.

These formulations can be prepared by per se known methods. For example, the formulations can be prepared by blending an active compound with an extender, that is, a liquid diluent; liquefied gas diluent; solid diluent or carrier, and in some cases with a surfactant, specifically, an emulsifier and/or dispersing agent and/or foaming agent and the like.

As the liquid diluents or carriers, there can be generally cited aromatic hydrocarbons (for instance, xylene, toluene, alkylnaphthalene and the like), chlorinated aromatic or chlorinated aliphatic hydrocarbons (for instance, chlorobenzene, ethylene chlorides, methylene chloride and the like), aliphatic hydrocarbons (for instance, cyclohexane and the like, paraffins (for instance, mineral oil distillates)), alcohols (for instance, butanol, glycol, and ethers and esters thereof and the like), ketones (for instance, acetone, methyl ethyl ketone, methyl isobutyl ketone, cyclohexanone and the like), highly polar solvents (for instance, dimethylformamide, dimethylsulfoxide and the like), water and the like. When using water as an extender, for example, an organic solvent can be also used as an auxiliary solvent.

The liquefied gas diluents or carriers are prepared by liquefying substances that are gaseous at ambient temperature under atmospheric pressure, and exemplified by propellants for aerosol, such as butane, propane, nitrogen gas, carbon dioxide, halogenated hydrocarbons and the like.

The solid diluents include, for example, naturally occurring minerals in soil (for instance, kaolin, clay, talc, chalk, quartz, attapulgite, montmorillonite, diatomaceous earth and the like) and synthetic minerals for soil (for instance, highly dispersed silicic acid, alumina, silicates and the like).

The solid carriers for granules include, for example, milled sorted rocks (for instance, calcite, marble, pumice, sepiolite, dolomite and the like), synthetic particles of inorganic and organic powders, and fine granules of organic substances (for instance, sawdust, coconut fruit shells, corn cobs, tobacco stems and the like).

The emulsifiers and/or foaming agents include nonionic and anionic emulsifiers (for instance, polyoxyethylene fatty acid esters, polyoxyethylene fatty acid alcohol ethers (for instance, alkylarylpolyglycol ethers, alkylsulfonates, alkylsulfates, arylsulfonates and the like)), albumin hydrolyzates and the like.

The dispersing agents include, for example, lignin sulfite waste liquid, methyl cellulose and the like.

Binders can also be used in formulations (dust formulations, granules, emulsifiable concentrates). Useful binders include, for example, carboxymethyl cellulose, and natural and synthetic polymers (for instance, gum arabic, polyvinyl alcohol, polyvinyl acetate and the like).

Coloring agents can also be used, and include inorganic pigments (for instance, iron oxide, titanium oxide, Prussian blue and the like), organic dyes such as alizarin dyes, azo dyes or metal phthalocyanine dyes, and trace elements such as iron, manganese, boron, copper, cobalt, molybdenum, zinc and salts thereof.

The formulation can generally contain an active ingredient within the range of 0.01 to 99% by weight, preferably 0.05 to 95% by weight.

The active compound itself can be used in the form of a commercially available formulation or a usable form in which the active compound is used in a mixture with other active compounds, for instance, insecticides, baits, bactericides, acaricides, nematocides, fungicides, growth regulators, herbicides and the like.

The active compound itself can be also used in a mixture with a synergist. The synergist itself needs not to be active, and is a compound which enhances a function as an active compound. The active compound can also be used in the form of a mixture with one or more other active compounds to achieve simultaneous control of a plurality of pests or to inhibit their resistance or endurance in some situations of application.

The content of the active compound itself in a commercially available formulation can be widely varied, and adjusted within a range from, for example, 0.00000001 to 100% by weight, preferably 0.0000001 to 1% by weight, and more preferably 0.000001 to 0.01% by weight.

[Examples]

Next, a method for determining the practically useful application dose of a pesticide, a method for developing a pesticide and a method for indicating the performance of a pesticide of the present invention are more specifically described in due order by means of the following working examples.

Method for determining the practically useful application dose

Example 1

Using the potency data given in the 1997 Agricultural Chemical Test Results Report, the practically useful application dose of NC-1111 (code number for an acaricide being developed by Nissan Chemical Industries, Ltd.) for female adults of the citrus red mite is determined. Sanmite® (a commercially available acaricide developed by Nissan Chemical Industries, Ltd.) serves as the control pesticide.

Bioassay tests are conducted using *Citrus natsudaidai* Hayata as the test crop. In concentration-mortality curve testing, female adults of the citrus red mite (*Oiso* colony, susceptible strain) are inoculated to tangerine leaf discs of 27 mm in diameter; the discs are placed in a constant-temperature room at 25°C, and after 24 hours passed, all other than healthy female adults are removed. The specified liquid agent is applied using a sprayer, and the discs are placed in a constant-temperature room at 25°C. The mortality is determined 24 hours after application. On the other hand, in residual activity testing, the liquid agent in the specified concentration is applied to citrus trees (1.2 m high) in a field at a rate of 2 liters per tree using a shoulder-held applicator, and after 1, 4, 7, 14 or 21 days passed from the application, leaves are cut to obtain leaf discs. Female adults of the citrus red mite are inoculated at 10 mites/disc, and after 24 hours, the mortality is calculated.

The concentration-mortality curve testing data are shown in Table 1, and the residual activity testing data are shown in Tables 2 and 3.

(Table 1)

| Applied Liquid Agent Concentration (ppm) | Mortality (%: Leaf Disc Method, observed after 24 hours) | |
|---|---|---|
| | NC-1111 | Sanmite® |
| 40 | 96. 4 | |
| 20 | 88. 9 | |
| 10 | 50. 0 | |
| 5 | 38. 5 | 100. 0 |
| 2. 5 | 28. 6 | 96. 8 |
| 1. 25 | | 94. 7 |
| 0. 63 | | 64. 0 |

(Table 1)   (continued)

| Applied Liquid Agent Concentration (ppm) | Mortality (%: Leaf Disc Method, observed after 24 hours) | |
|---|---|---|
| | NC-1111 | Sanmite® |
| 0. 31 | | 24. 0 |
| 0. 16 | | 15. 4 |

(Table 2)

| Days after Application Treatment at 200 ppm | Female Adult of Citrus Red Mite | |
|---|---|---|
| (days) | Mortality (%) | Converted Liquid Agent Concentration (ppm) |
| 1 | 93. 1 | 33. 7 |
| 4 | 85. 2 | 25. 1 |
| 7 | 60. 9 | 10. 2 |
| 14 | 20. 8 | 2. 28 |
| 21 | 11. 1 | 1. 59 |

(Table 3)

| Days after Application Treatment at 100 ppm | Female Adult of Citrus Red Mite | |
|---|---|---|
| (days) | Mortality (%) | Converted Liquid Agent Concentration (ppm) |
| 1 | 100 | |
| 4 | 100 | |
| 7 | 100 | |
| 14 | 96. 2 | 2. 64 |
| 21 | 86. 2 | 1. 85 |

The practically useful application dose of NC-1111 was calculated in accordance with the following procedures.

The concentration-mortality curve data for NC-1111 and Sanmite® in Table 1 were shown in Tables 2 and 3 using Excel® (Microsoft), and the correlation equations between the two agents on the mortality versus applied liquid agent concentration were obtained from the graphs (Figures 2 and 3) based on logarithmic approximation.

Correlation equation of mortality versus applied liquid agent concentration for NC-1111

Mortality (%) = 26.834Ln [Applied Liquid Agent Concentration (ppm)] - 1.3079

Correlation equation of mortality versus applied liquid agent for concentration Sanmite®

Mortality (%) = 27.833Ln [Applied Liquid Agent Concentration (ppm)] + 69.142

Using the correlation equations obtained, mortality from the outdoor residual activity testing was converted to equivalent liquid agent concentrations. The numerals obtained are shown in the right column of Tables 2 and 3, respectively.

Subsequently, using the converted liquid agent concentrations after 14 days passed from the treatment (t), a test environmental factor shared by the two agents, decreasing constants were calculated. For NC-1111, the decreasing constant was determined to be 0.320 by substituting 200 for N(0) and 2.28 for N in the decreasing speed Equation-1:

$$N/N(0) = e^{-\lambda t} \hspace{3cm} \text{Equation-1}$$

Also, for Sanmite®, the decreasing constant was determined to be 0.260 by substituting 100 for N(0) and 2.64 for N in Equation-1.

By substituting each decreasing constant in the half-life Equation-2:

$$\tau_{1/2} = \ln2/\lambda = 0.693/\lambda \qquad \text{Equation-2,}$$

the outdoor half-life was determined to be 2.17 days for NC-1111 and 2.67 days for Sanmite® under these residual activity test conditions.

Similarly, in the case where the number of days after treatment (t) was 21 days, the decreasing constant and outdoor half-life were determined to be 0.230 and 3.01 days for NC-1111, and 0.169 and 4.09 days for Sanmite®, respectively. However, the mortality for NC-1111 after 21 days was 11.1%; it is anticipated that the converted liquid agent concentration obtained from the mortality versus concentration-mortality curve correlation equation would not be always accurate because of the small value. For this reason, the decreasing constant in the case where the number of days after treatment (t) was 21 days was not used for the calculation of the practically useful application dose of NC-1111 as described below.

The residual activity period (t) of the control pesticide Sanmite® in its practical concentration (100 ppm = N (0)) under the residual activity test conditions with an effective preventive value of 90% for the target pest was calculated as follows:

An preventive value of 90 (hypothetically regarded as 90%) was substituted in the concentration-mortality curve coefficient equation:

$$\text{Mortality (\%) =}$$

$$27.833\text{Ln [Applied Liquid Agent Concentration (ppm)]} + 69.142,$$

and the corresponding residual liquid agent concentration N' was determined to be 2.10 ppm. The concentration N' of 2.10 and the decreasing constant of Sanmite® after 14 days: $\lambda = 0.260$ were substituted in the decreasing speed Equation-1:

$$N'/N(0)' = e^{-\lambda t} \qquad \text{Equation-1}$$

to obtain t = 14.86 days. This is a residual activity period of Sanmite® for female adults of the citrus red mite in the citrus field under the residual activity test conditions used (residual activity period in which an preventive value of 90% is maintained when the agent is applied in a practically useful application dose of 100 ppm). The application concentration required for NC-1111 to exhibit the same performance as that of the control pesticide Sanmite®, that is, the practically useful application dose, is calculated as follows:

By substituting the corresponding residual liquid agent concentration N = 30.04 ppm, which is the residual liquid agent concentration (N) for NC-1111 when the mortality is 90%, and which is obtained by substituting the preventive value = 90 in the concentration-mortality curve equation for NC-1111 for female adults of the citrus red mite:

$$\text{Mortality (\%) =}$$

$$26.834\text{Ln [Applied Liquid Agent Concentration (ppm)]} - 1.3079,$$

the decreasing constant = 0.320 after 14 days, which is the same as in Sanmite®, and the residual activity period t = 14.85 days of Sanmite® in the actual useful application dose, in the decreasing speed equation:

$$N/N(0) = e^{-\lambda t} \qquad \text{Equation-1,}$$

the practically useful application dose N for NC-1111 was determined to be 3460 ppm.

The practical applied liquid agent concentration (useful application dose) calculated as above was obtained by using a susceptible strain of the citrus red mite. Red mites had acquired resistance to various pesticides. In the fields in which red mites have already been resistant to Sanmite®, Sanmite® itself does not serve as a control pesticide. When there is no effective acaricide, the residual activity period does not always require a long period such as 14.86 days as calculated above. Provided that no competing agents are available, it is more preferable to use a pesticide for a somewhat short residual activity period so as to avoid the onset of resistance. Hence, the practical applied liquid agent concentration (useful application dose) when the residual activity period is provisionally set to 6 days (t = 6) is calculated as follows:

By substituting the residual liquid agent concentration N = 30.04 (ppm) for retaining an preventive value of 90%, the decreasing constant = 0.320 and the residual activity period, t = 6 (days), in the decreasing speed equation:

$$N/N(0) = e^{-\lambda t} \qquad \text{Equation-1,}$$

the practically useful application dose N(0) was determined to be 204 (ppm).

Example 2

The equations and tables used in Example 1 were previously inputted in the respective cells of the spreadsheet program Excel® (Microsoft). In one worksheet, Tables 1, 2 and 3 and Figures 2 and 3 used in Example 1 were appropriately arranged. A spreadsheet was generated, having three lines for "name of agent," "name of pesticide," and "name of control pesticide" vertically arranged under these tables and figures, and also having a total of 13 columns laterally arranged for "name of agent" (overlapping), "application concentration (ppm) in concentration-mortality curve testing," "preventive value (%) corresponding to the application concentration," "application concentration (ppm) in residual activity testing," "number of days after treatment (days)," "decreasing constant," "half-life (days)," "effective preventive value (%) based on allowable damage level in residual activity testing," "applied liquid agent concentration (ppm) corresponding to the preventive value," " practically useful application dose (ppm) for actual situations," "residual activity period (days) in the residual activity testing with treatment in the practically useful application dose," as well as two items for calculating the practically useful application dose (ppm) from the residual activity period (days).

For the application concentration in the concentration-mortality curve testing, the application concentration in the residual activity testing, the number of days after treatment, and the effective preventive value based on the allowable damage level in the residual activity testing, numerals obtained by the bioassay or desired effective preventive values were entered for each agent; in the cells for each agent for the preventive value corresponding to the concentration in the concentration-mortality curve testing, decreasing constant, half-life, applied liquid agent concentration corresponding to the effective preventive value based on the allowable damage level in the residual activity testing, and the residual activity period in the residual activity testing with treatment in the practically useful application dose, functional equations corresponding to the aforementioned correlation equations and numerical formulas were entered; values were entered for the practically useful application dose of the control pesticide and the desired residual activity period of the subject agent; and corresponding functional equations were entered in the cell for the practically useful application dose equivalent to that of the control pesticide, or the practically useful application dose to provide desired residual activity period, for the subject agent.

In accordance with the method described above, a practically useful application dose which is equivalent to that of the control pesticide or which provides any residual activity period was obtained instantaneously by simply entering the values obtained in the bioassay, and the values of desired residual activity period and the like into the personal computer.

Example 3

In developing a new pesticide, the practically useful application dose of a developmental candidate compound A for actual situation (represented by the useful application dose to ensure the duration and effect equivalent to those obtained by treatment with 100 ppm of fenvalerate® herein) is determined to be 50 ppm, from the results of indoor concentration-mortality curve testing and outdoor residual activity testing using third-instar larvae of the common cutworm (*Spodoptera litura* Fabricius) fed on pot-planted cabbages using as the control pesticide fenvalerate® in the practically useful application dose of 100 ppm, in the same manner as in Example 1. By employing the method of the present invention, the practically useful application dose of the developmental candidate compound A can be determined on Day 14 after the candidate compound was firstly synthesized.

Comparative Example 1

The feasibility of the development of the compound A is investigated by an ordinary developmental approach, that is, the practically feasible useful application dose is determined by conducting indoor screening testing using an artificial feed, concentration-mortality curve testing using an artificial feed, indoor concentration-mortality curve testing using pot-planted cabbages and indoor residual activity testing using pot-planted cabbages, and then evaluating the practical utility in an open field more than once.

As determined by a comparison of LC50 values using the artificial feed, it can be confirmed that the relative potency of the developmental candidate compound A is 10 times that of the control pesticide fenvalerate®. Subsequently, a comparison of LC50 values using the pot-planted cabbages confirms that the relative potency of the developmental candidate compound A is 5 times that of fenvalerate®. At this time, two months have already passed since the compound A is firstly synthesized. Subsequently, residual activity testing is conducted indoors in a useful application dose of 20 ppm using pot-planted cabbages, and the compound A is found to possess comparable performance to 100 ppm fenvalerate® as the control.

In the next spring, field testing is conducted for the common cutworm in a cabbage-planted field. Since the relative potency of the developmental candidate compound A is found to be 5 times that of fenvalerate® in the indoor testing, the treatment application dose for the developmental candidate compound A is set in three concentrations: 10, 20 or 30 ppm. However, because the occurrence of the common cutworm is minimal, no significant difference from fenvalerate® was evident in any useful application dose.

After one week, a field testing is again conducted in the same three concentrations. However, since a minor occurrence of the common cutworm is anticipated, the number of experimental plots is significantly increased and another testing is also conducted in plots in which a sufficient number of third-instar larvae of the common cutworm are set free on the cabbages in the field on the day prior to application of the agent. As expected, no satisfactory conclusion was obtained, due to the minor growth, from the field testing based on natural occurrence. However, from the results of the plots where the larvae were set free, it was confirmed that the compound A was as effective for pest control as the fenvalerate® in a useful application dose of 20 ppm, a level one-fifth that of fenvalerate®, similar to the indoor pot testing.

In autumn, since the occurrence of the common cutworm reached a peak in the field, a field testing based on natural occurrence is conducted. As a result, the compound A is found to be inferior to 100 ppm of fenvalerate® as the control in all treatment application dose of 10, 20 or 30 ppm. Since no occurrence was observed in the next generation, the field testing was carried over to the following year.

In conclusion, with the conventional developmental approach, it remains impossible to determine the practically useful application dose despite the elapse of one year after the synthesis of compound A. In the development using the conventional method of Comparative Example 1, as compared to the case using the method of the present invention in Example 2, the application dose of the synthetic sample increased dramatically with the increase in frequency of field testing, resulting in significantly increased expenses for arrangement of experimental plots, for conducting testing and the like, and a vast amount of cost was lost due to the one-year delay of development.

Example 4

It has been hitherto impossible to indicate the relative practical performance of a plurality of pesticides for the same pest in the target crop. For this reason, LC50 values and the like, obtained by various types of concentration-mortality curve testing, have been used as relative potency for convenience. From Comparative Example 1, it is evident that these values do not reveal the practical performance of each pesticide in actual situation for use.

According to the appropriate useful application doses for rice blast control agents registered by their manufacturers, commercially available pesticide B or C was spread to separate fields in a concentration of 50 ppm or 100 ppm, respectively. Despite the outbreak of rice blast, the pesticide B fully controlled rice blast over 30 days without losing its potency. On the other hand, the pesticide C lost its potency within about 14 days, and the rice plants damaged by rice blast produced almost no rice grains.

In the same manner as in Example 1, from the results of indoor concentration-mortality curve testing and outdoor residual activity testing with pot-planted rice and *Pyricularia oryzae* using 50 ppm of the pesticide B as the control pesticide, the practically useful application dose of the pesticide C to have the same residual activity period as the pesticide B was determined to be 400 ppm by the calculation method according to the present invention.

In order to show the practical performance of the pesticide C, there can be used the decreasing constant, LC50 value, half-life and the like, obtained from the method of the present invention by comparing with the control pesticide, or various values obtained by combining those values. For example, the following methods are used.

(1) The practical performance is shown at 400 ppm which is a useful application dose required for the same residual activity period as control pesticide B, of which practically useful application dose is 50 ppm;

(2) The practical performance is shown at 14/30 = 0.46 times which is a residual activity period of the pesticide C in its actual useful application dose of 100 ppm, relative to the control pesticide B; or

(3) By comparing the values for the two agents obtained by the equation: $e^{-\lambda t}/LC50$, using the residual activity period t for the control pesticide in the residual activity testing, the indoor LC50 value obtained in the course of calculation for the practically useful application dose, and the decreasing constant in the residual activity testing, it is distinctly described that there is necessitated a practically useful application dose eight times that of the control pesticide as in the above (1) when the pesticide C is used.

In the performance indication by a conventional method, only useful application dose based on dilution ratio and the like is described. By comparison with a control pesticide according to the present invention, it has been possible to distinctly describe the information concerning both useful application dose and residual activity period. As a result, since it has become possible for a consumer to easily understand the performance of different agents in actual situation, and to participate in the choice of agents, this will lead to his/her positive attitude for agricultural management.

This is because the consumers using a pesticide monitor the status of occurrence of pests over time. Therefore, they can make a judgment based on these values to choose the pesticide having an appropriate residual activity period according to the status of occurrence on each occasion. There is no need for continuous use of incorrectly chosen expensive agents nor pest control failure due to the use of inexpensive agents.

INDUSTRIAL APPLICABILITY

The methods of the present invention for determining the practically useful application dose of a pesticide and for developing a pesticide are utilized in the process of development for a pesticide for agriculture, prevention of epidemics and other purposes. Using the methods of the present invention, it becomes possible to understand the performance of a pesticide much more accurately and extremely quickly as compared to the case using conventional methods. The present invention offers vast merits on development to the manufacturers involved in the manufacture and development of such a pesticide.

Furthermore, using the method of the present invention for indicating the performance of a pesticide, it becomes possible to compare the relative performance of a wide variety of pesticides, which has been impossible to date. This enables a consumer to choose an appropriate pesticide for actual situation, thus making it possible to significantly improve safety- or economy-related issues caused by overuse or insufficient effect. This in turn is expected to significantly contribute to improvements in global agricultural economics and environmental issues. Additionally, the positive choice of a pesticide by the consumer will lead to change in their critical attitude toward agricultural chemicals.

**Claims**

1. A method for determining a practically useful application dose of a pesticide comprising using the decreasing speed of the pesticide applied in actual situation for use or under environmental factors corresponding to the actual situation.

2. The method for determining a practically useful application dose of a pesticide according to claim 1, wherein said pest is any one selected from harmful insects, diseases and weeds.

3. The method for determining a practically useful application dose of a pesticide according to claim 1, wherein said pesticide is any one selected from dust formulations, dust-granule mixtures, wettable powders, liquid formulations, tablets, emulsifiable concentrates, oil solutions, ULV formulations, soluble concentrates, suspension concentrates, concentrated emulsions, microemulsions, microcapsules and suspoemulsions.

4. The method for determining a practically useful application dose of a pesticide according to claim 1, wherein the results of concentration-mortality curve testing and the results of residual activity testing conducted in actual situation for use or under environmental factors corresponding to the actual situation are used in determining the decreasing speed of the pesticide applied in actual situation for use or under environmental factors corresponding to the actual situation.

5. The method for determining a practically useful application dose of a pesticide according to claim 1, wherein the results of concentration-mortality curve testing, and the results of residual activity testing conducted in actual situation for use or under environmental factors corresponding to the actual situation are used in determining the decreasing speed of the pesticide applied in actual situation for use or under environmental factors corresponding to the actual situation, and wherein a useful application dose with which a desired residual activity period or a desired effective preventive value can be retained is calculated by the comparison with a control pesticide.

6. The method for determining a practically useful application dose of a pesticide according to claim 1, wherein a method comprising the step of converting a damage rate or a damage suppression rate obtained from residual activity testing conducted in actual situation for use or under environmental factors corresponding to the actual situation, based on the results of concentration-mortality curve testing, to an equivalent useful application dose is used for determining the decreasing speed of the pesticide applied in actual situation for use or under environmental factors corresponding to the actual situation, and wherein a useful application dose with which a desired residual activity period or a desired effective preventive value can be retained is calculated by comparison with a control pesticide.

7. The method for determining a practically useful application dose of a pesticide according to claim 1, wherein a spreadsheet program is used when the practically useful application dose is calculated by using the decreasing speed of the pesticide based on bioassay data.

8. A method for developing a pesticide, comprising using the decreasing speed of the pesticide applied in actual situation for use or under environmental factors corresponding to the actual situation.

9. The method for developing a pesticide according to claim 8, wherein said pest is any one selected from harmful insects, diseases and weeds.

10. The method for developing a pesticide according to claim 8, wherein said pesticide is any one selected from dust formulations, dust-granule mixtures, wettable powders, liquid formulations, tablets, emulsifiable concentrates, oil solutions, ULV formulations, soluble concentrates, suspension concentrates, concentrated emulsions, microemulsions, microcapsules and suspoemulsions.

11. The method for developing a pesticide according to claim 8, wherein the results of concentration-mortality curve testing and the results of residual activity testing conducted in actual situation for use or under environmental factors corresponding to the actual situation are used in determining the decreasing speed of the pesticide applied in actual situation for use or under environmental factors corresponding to the actual situation.

12. The method for developing a pesticide according to claim 8, wherein the results of concentration-mortality curve testing, and the results of residual activity testing conducted in actual situation for use or under environmental factors corresponding to the actual situation are used in determining the decreasing speed of the pesticide applied in actual situation for use or under environmental factors corresponding to the actual situation, and wherein a useful application dose with which a desired residual activity period or a desired effective preventive value can be retained is calculated by the comparison with a control pesticide.

13. The method for developing a pesticide according to claim 8, wherein a method comprising the step of converting a damage rate or a damage suppression rate obtained from residual activity testing conducted in actual situation for use or under environmental factors corresponding to the actual situation, based on the results of concentration-mortality curve testing, to an equivalent useful application dose is used for determining the decreasing speed of the pesticide applied in actual situation for use or under environmental factors corresponding to the actual situation, and wherein a useful application dose with which a desired residual activity period or a desired effective preventive value can be retained is calculated by comparison with a control pesticide.

14. The method for developing a pesticide according to claim 8, wherein a spreadsheet program is used when the practically useful application dose is calculated by using the decreasing speed of the pesticide based on bioassay data.

15. A method for indicating the performance of a pesticide, comprising using the decreasing speed of the pesticide applied in actual situation for use or under environmental factors corresponding to the actual situation.

16. The method for indicating the performance of a pesticide according to claim 15, wherein said pest is any one selected from harmful insects, diseases and weeds.

**17.** The method for indicating the performance of a pesticide according to claim 15, wherein said pesticide is any one selected from dust formulations, dust-granule mixtures, wettable powders, liquid formulations, tablets, emulsifiable concentrates, oil solutions, ULV formulations, soluble concentrates, suspension concentrates, concentrated emulsions, microemulsions, microcapsules and suspoemulsions.

**18.** The method for indicating the performance of a pesticide according to claim 15, wherein the results of concentration-mortality curve testing and the results of residual activity testing conducted in actual situation for use or under environmental factors corresponding to the actual situation are used in determining the decreasing speed of the pesticide applied in actual situation for use or under environmental factors corresponding to the actual situation.

**19.** The method for indicating the performance of a pesticide according to claim 15, wherein the results of concentration-mortality curve testing, and the results of residual activity testing conducted in actual situation for use or under environmental factors corresponding to the actual situation are used in determining the decreasing speed of the pesticide applied in actual situation for use or under environmental factors corresponding to the actual situation, and wherein a useful application dose with which a desired residual activity period or a desired effective preventive value can be retained is calculated by the comparison with a control pesticide.

**20.** The method for indicating the performance of a pesticide according to claim 15, wherein a method comprising the step of converting a damage rate or a damage suppression rate obtained from residual activity testing conducted in actual situation for use or under environmental factors corresponding to the actual situation, based on the results of concentration-mortality curve testing, to an equivalent useful application dose is used for determining the decreasing speed of the pesticide applied in actual situation for use or under environmental factors corresponding to the actual situation, and wherein a useful application dose with which a desired residual activity period or a desired effective preventive value can be retained is calculated by comparison with a control pesticide.

Figure 1

Figure 2

$$y = 26.834\mathrm{Ln}(x) - 1.3079$$
$$R^2 = 0.9332$$

Figure 3

$y = 27.833 Ln(x) + 69.142$

$R^2 = 0.8901$

EP 1 386 538 A1

# INTERNATIONAL SEARCH REPORT

| | International application No. |
|---|---|
| | PCT/JP02/03711 |

**A. CLASSIFICATION OF SUBJECT MATTER**
Int.Cl$^7$ A01N25/00, A01M7/00, A01G7/00, A01C21/00, G06F19/00

According to International Patent Classification (IPC) or to both national classification and IPC

**B. FIELDS SEARCHED**

Minimum documentation searched (classification system followed by classification symbols)
Int.Cl$^7$ A01N25/00, A01M7/00, A01G7/00, A01C21/00, G06F19/00

Documentation searched other than minimum documentation to the extent that such documents are included in the fields searched

Electronic data base consulted during the international search (name of data base and, where practicable, search terms used)
JOIS(JICST FILE)

**C. DOCUMENTS CONSIDERED TO BE RELEVANT**

| Category* | Citation of document, with indication, where appropriate, of the relevant passages | Relevant to claim No. |
|---|---|---|
| P,X<br>P,Y | KISHIDA, H., "Behavior of Pesticides(1): Efficiency Evaluation of Pesticides", Biosci.Biotechnol. Biochem., 2001nen, Vol.65, No.5, pages 1045 to 1053 | 1-7<br>8-14,15-20 |
| X<br><br>Y | Supervised by Kazuo FUKUNAGA, "Noyaku-Anzensei o Meguru Gijutsu to Gyosei", Hakua Shobo, 1981nen, pages 37, 38 to 39, 45 | 1-7,8-14,<br>15-20<br>1-7,8-14,<br>15-20 |
| Y | VAN STRAALEN, N.M., "Ecotoxicological Risk Assessment of Pesticides in Soil", 8th Int. Congr. Pestic. Chem. Options 2000, 1995nen, pages 418 to 423 | 1-20 |
| Y | BRUEGGEMANN R., "Application of the Concept of Partial Order on Comparative Evaluation of Environmental Chemicals", Acta. Hydrochim. Hydrobiol., 1999nen, Vol.27, No.3, pages 170 to 178 | 1-20 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 July, 2002 (02.07.02) | 23 July, 2002 (23.07.02) |

| Name and mailing address of the ISA/<br>Japanese Patent Office | Authorized officer |
|---|---|
| Facsimile No. | Telephone No. |

Form PCT/ISA/210 (second sheet) (July 1998)

20

**INTERNATIONAL SEARCH REPORT**

| | International application No. |
|---|---|
| | PCT/JP02/03711 |

C (Continuation). DOCUMENTS CONSIDERED TO BE RELEVANT

| Category* | Citation of document, with indication, where appropriate, of the relevant passages | Relevant to claim No. |
|---|---|---|
| Y | MARTINEZ L., "Prescience of metolachlor, atrazine and deethylatrazine in soil and its simulation by deterministic models", Toxicol. Environ. Chem., 1996nen, Vol.54, No.1/4, pages 219 to 232 | 1-20 |
| Y | JP 11-299351 A (Omron Corp.), 02 November, 1999 (02.11.99), (Family: none) | 1-20 |
| Y | JP 11-313594 A (Omron Corp.), 02 November, 1999 (02.11.99), (Family: none) | 1-20 |
| Y | JP 2000-2659 A (Bio Communication Gijutsu Kenkyu Kumiai), 07 January, 2000 (07.01.00), (Family: none) | 1-20 |
| A | Yoshio HONMA, "Hyokeisan Data CAI Kyozaika Program oyobi Data-shu no Sakusei", J.Chem.Softw., 1998nen, Vol.4, No.1, pages 11 to 18 | 7,14 |
| A | Shigeo MORIYA, "Koho Kozo Sekkei no tameno Kozo Sekkei Chishiki Base System no Kaihatsu", Kagaku Busshitsu Sekkeito Shien no tame no Chishiki Base System ni Kansuru Kenkyu(Dai 1 Ki) Seika Hokokusho Showa 61 to 63nendo, 1990nen, pages 170 to 180 | 7,14 |

Form PCT/ISA/210 (continuation of second sheet) (July 1998)

**EP 1 386 538 A1**

<table>
<tr><td>**INTERNATIONAL SEARCH REPORT**</td><td>International application No.<br>PCT/JP02/03711</td></tr>
</table>

**Box I     Observations where certain claims were found unsearchable (Continuation of item 1 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II     Observations where unity of invention is lacking (Continuation of item 2 of first sheet)**

This International Searching Authority found multiple inventions in this international application, as follows:
    The inventions as set forth in claims 1 to 7, claims 8 to 14 and claims 15 to 20 respectively relate to a method of determining a practically useful application dose of a pesticide with the use of reduction speed of a chemical under practical conditions, a method of developing a pesticide with the use of reduction speed of a chemical under practical conditions, and a method of indicating the performance of a pesticide with the use of reduction speed of a chemical under practical conditions.
    The matter common to these inventions resides in "a method of using a pesticide with the use of reduction speed of a chemical under practical conditions". (Continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐     The additional search fees were accompanied by the applicant's protest.

☐     No protest accompanied the payment of additional search fees.

Form PCT/ISA/210 (continuation of first sheet (1)) (July 1998)

**INTERNATIONAL SEARCH REPORT**

International application No.

PCT/JP02/03711

Continuation of Box No.II of continuation of first sheet(1)

However, it is not novel but described in "Noyaku-Anzenseio Meguru Gijutsu to Gyosei", supervised by Kazuo Fukunaga, Hakua Shobo, 1981). Since there is no common matter considered as a special technical feature in the meaning as defined in the second sentence in PCT Rule 13.2, it cannot be considered that there is any technical relevancy among the inventions as described above under PCT Rule 13. Such being the case, this international application has 3 groups of inventions.

Form PCT/ISA/210 (extra sheet) (July 1998)